# EUROPEAN PATENT APPLICATION

(11) **EP 4 477 474 A1**
(43) Date of publication of application: **18.12.2024**
(21) Application number: 24020191.3
(22) Date of filing: 10.06.2024
(51) Int. Cl.: B60R 13/01

(54) **METHOD AND APPARATUS FOR PROTECTING A PANEL WITHIN THE LOAD-CARRYING SPACE OF A VEHICLE**

(30) Priority: 12.06.2023 GB 202308745
(71) Applicant: P & G Design (Lincs) Limited, Horncastle Lincolnshire LN9 5HZ (GB)
(72) Inventor: Kimsey, Paul, Horncastle, LN9 5HZ (GB)
(74) Representative: Craske, Stephen Allan

(57) **Abstract**

The method and apparatus for protecting a metal panel 35 within the load-carrying space of a vehicle includes attaching a protective covering 10 of sheet material to the panel using a releasable connector 20. The releasable connector includes a first part 21 and a second part 22 each having a disc-shaped base portion 23, 25 and a connecting formation 24, 26 by which the first and second parts can be releasably joined together. The second part 22 is attached to the panel by applying an adhesive layer 36 between the base portion 25 and the panel. The connectors allow damaged coverings to be replaced easily and avoids drilling holes which reduce the value of the vehicle.

## Description

### TECHNICAL FIELD OF THE INVENTION

This invention relates to protecting the load-carrying space of a vehicle.

### BACKGROUND

Light commercial vehicles (LCVs) such as vans and trucks generally include a load-carrying space which is manufactured with a hard metal floor, walls and door panels as part of the vehicle structure. Vans and LCV owners generally have good reason to protect their vehicles to maintain the best possible residual value, and they often have ply-lining boards fitted to protect the load space. Ply-Lining is typically a cheap 2 or 3 layer plywood, which is screwed to the wall panels of the vehicle interior to protect the metal panels and paintwork against damage and scratches. It is also common practice to ply-line the floors for the same reason. The problem with ply-lining is that although it is a comparatively cheap product which is easily screwed in place, when removed there are screw holes left in the walls and flooring which, over time, tend to become a focus for rusting. Furthermore, should the ply-lining be damaged or a fluid spill occur that can cause erosion or staining of the van floor, little can be done short of replacing a whole lining panel. Ply-Lining generally requires a professional to fit, and because of the size of the panels, can only be transported or supplied via specialist haulage companies at high cost, often with extended delivery times due to scheduling being required.

US 5 803 524 discloses a ribbed protection panel secured to vertical braces on a van interior using headed fasteners or releasable pads.

US 9 482 491 discloses a way of detachably holding an armor panel to a vehicle. Twist-lock clamps are inserted through holes cut in the armor panel to engage latch plates secured to the vehicle.

US 4 789 574 discloses a removable protective liner for vehicles which is formed of a flexible sheet material with an inner padded layer. The liner is secured by two-part snap fasteners secured to the liner and a metal surface of the vehicle. The initial fitting of such a liner would be difficult for non-professional fitters. Furthermore, once in place the liner would be difficult to remove and re-fit accurately and easily, and there is a significant risk of damaging the liner in the process.

The present invention seeks to provide a new and inventive way of protecting the load-carrying space of a vehicle which reduces cost, is easier to maintain, and reduces the risk of permanent damage to the vehicle.

### SUMMARY OF THE INVENTION

When viewed from one aspect the present invention proposes a method of protecting a panel within the load-carrying space of a vehicle which includes attaching a protective covering sheet to the panel using a releasable connector.

The releasable connector includes a first part and a second part each having a base portion and a connecting formation by which the first and second parts can be releasably joined together.

The second part is attached to the panel by applying an adhesive layer between the base portion thereof and the panel.

The base portion of the first part overlies a portion of the protective covering sheet and the connecting formation of the first part is inserted through a hole in the protective covering sheet. When fitting the protective sheet the holes can first be aligned with the second part before inserting the first part.

One of said connecting formations comprises a stem which carries a head and the other connecting formation comprises a plurality of resilient arms. The resilient arms provide a secure connection but when the first and second parts are visually aligned they can be engaged with minimum pressure.

The invention also provides apparatus for protecting a panel within the load-carrying space of a vehicle, which includes the releasable connector.

### BRIEF DESCRIPTION OF THE DRAWINGS

The following description and the accompanying drawings referred to therein are included by way of non-limiting example in order to illustrate how the invention may be put into practice. In the drawings:
Figure 1 is a perspective view of the load-carrying space of a typical LCV;
Figure 2 is a detailed view of a protective covering used to protect an internal side panel of the load-carrying space; and
Figure 3 is an exploded sectional detail of a two-part connector used to secure the protective coverings to the internal surfaces of the LCV.

### DETAILED DESCRIPTION OF THE DRAWINGS

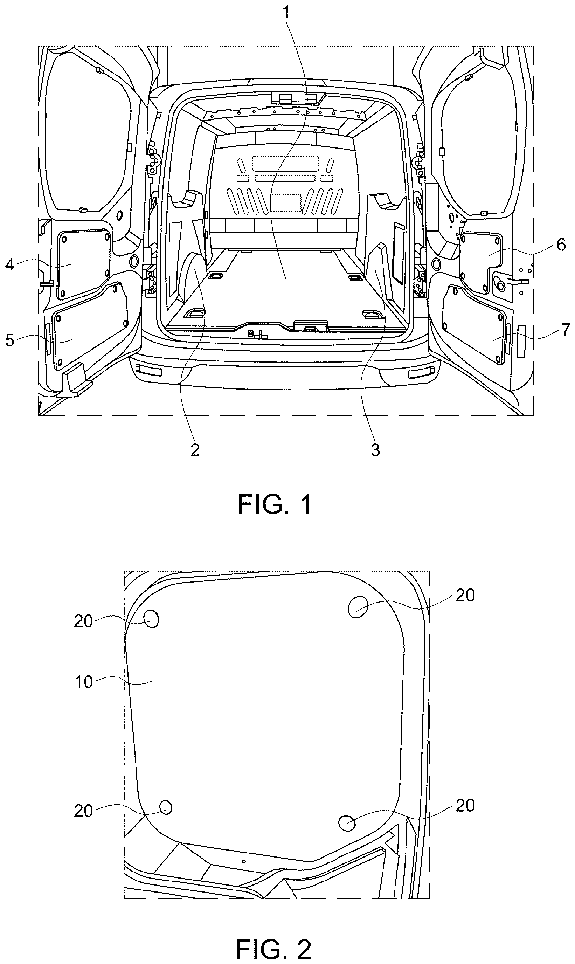

Referring to **Fig. 1****,** a typical load-carrying space of a small van is shown by way of example of a typical LCV. The load-carrying space of such a vehicle typically measures about 1.2m x 2.5m, but in larger vehicles the floor area can be quite extensive, up to 2.5m x 6m and beyond. The space has a painted sheet-metal floor which is part of the van structure, and which it is desired to protect against damage. The floor typically includes pressed strengthening ridges with several pivoted metal loops (six in this example) by which a load may be secured in position using straps or ropes. The load space also includes painted side panels, which typically include projecting metal wheel arches which are particularly prone to damage, as well as the internal painted surfaces of metal door panels. In this example the metal floor is covered by a shaped protective covering 1. The side panels, and particularly the wheel arches, are similarly covered by protective coverings 2 and 3. Similar protective coverings 4-7 are applied to protect exposed internal surfaces of the metal doors.

To protect the internal surfaces of the LCV the first step is to obtain a template recording the peripheral profile of each area of the load-carrying space to be protected. The template may be obtained in several ways. One way is to lay a sheet of paper or other flexible material over the area to be protected, draw around the required area, and then cut out the template to the drawn peripheral profile. Another way is to record the profile from visual scans or measurements and then store the template in an electronic form. Once the template for a particular make and model of van has been produced it can be kept and used to reproduce multiple protective coverings for other such vehicles. It will be noted that the peripheral profile of the template accurately records the outline of the area to be protected. In the case of the vehicle floor, the outline may incorporate notches corresponding to the position of any metal loops which are positioned at the periphery of the area to be protected. Alternatively, or in addition, apertures may also be formed in the template corresponding to loops which are inset from the periphery.

The next step is to form a protective covering with a profile conforming to the template. Sheet material used to produce the protective coverings should be tough and hard wearing, suitable to carry heavy equipment and protect the vehicle from knocks and scratches. It is also desirable, but not essential, that the sheet material is somewhat resilient to absorb impacts, and the sheet material may also be at least slightly flexible to better conform to the surface shape of any curved panels. A sheet thickness of approximately 10 mm is ideal although thinner or thicker materials may also be suitable. One suitable material is ethylene vinyl acetate (EVA), a polymer which is elastomeric (naturally stretchy and resilient) in a form which is rubber-like in softness and flexibility. Other thermoplastic elastomers which are durable and exhibit elastomeric characteristics may also be used, such as thermoplastic polyamide (TPA). It is generally preferred to use elastomeric materials such as EVA and TPA which are easily and cleanly recyclable. In some applications heavier non-flexible sheet materials may be more suitable. These include polymers such as polypropylene, which can be up to 15-20cm thick. Although these materials will not flex this could be an advantage in many cases, especially for the floor coverings. Manual or automated cutting machinery can be used to cut the sheet material to the template.

In the case of larger areas such as the protective floor covering 1, rather than being cut in a single piece corresponding to the template the protective covering is formed in two or more pieces depending on the size of the load space. The pieces can be connected together by integrally formed interlocking edge formations which (for example) comprise trapezoidal (dovetail) projections which interlock with corresponding trapezoidal notches. The distance between the projections, and between the notches, is greater than the length of the projections and notches, which has been found to produce a secure and tight joint whilst enabling the pieces to be connected together quickly.

In the case of smaller areas such as the protective covering 10 shown in **Fig. 2** which is used to protect an individual vertical area of the side and door panels, the covering is formed in discrete pieces each corresponding to the outline of the respective template.

Forming the protective coverings as discrete single pieces, or a number of pieces which can be connected together to form larger pieces in the manner of a jigsaw puzzle, has a number of advantages, one being that the smaller pieces are easier to cut without requiring specialised cutting machinery or particularly large work spaces. Another advantage is that the protective covering can be manufactured off-site to a consistently high standard and transported to the vehicle in a non-assembled condition without involving specialist transport at high cost and with extended delivery times. The smaller pieces can conveniently be packaged within the size and weight limits of most couriers and with lower transport costs.

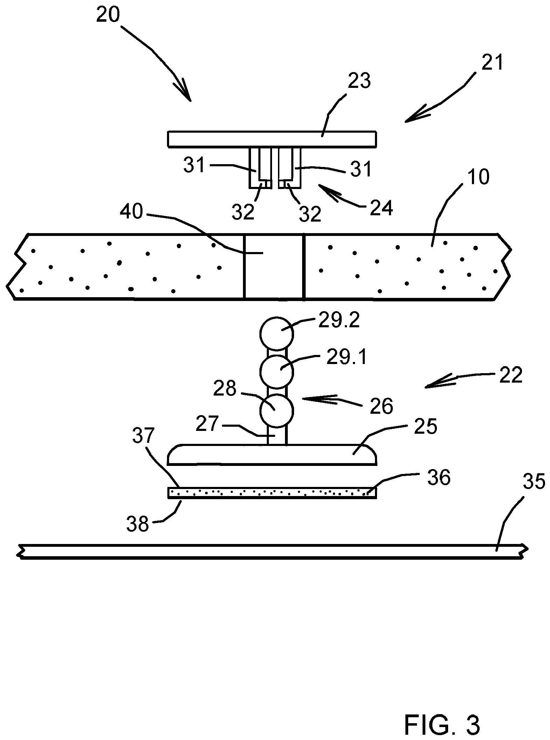

**Fig. 3** shows one of the releasable connectors which are used to secure the protective coverings to an internal surface of an LCV. The connector 20 comprises a first part 21 and a second part 22. The first part 21 has a disc-shaped base portion 23 and a first connecting formation 24 which projects centrally from the base portion 23. The second part 22 similarly has a disc-shaped base portion 25 and a second connecting formation 26 which projects centrally from the base portion 25. In this example the second connecting formation 26 comprises a stem 27 which carries a bead-shaped head 28. Preferably the stem also carries one or more additional heads, indicated by the references 29.1 and 29.2. By cutting the stem to the required length, the spacing between the outermost head, 28, 29.1 or 29.2, and the base portion 25 can be changed, as explained below. The first connecting formation 24 of first part 21 comprises a number of resilient arms 31 which project from the the base portion 23 in a generally cylindrical formation, and each of the arms 31 has an inturned lug 32 at its free end. The first connecting formation 24 can thus be engaged with the second connecting formation 26 by pressing the first and second parts together until the lugs 32 snap over the outermost head, 28, 29.1 or 29.2.

The second part 22 is attached to a vehicle panel 35 using a high strength contact adhesive pad 36. The opposite adhesive surfaces 37 and 38 of the pad may each be protected by a peelable backing (not shown) which is removed prior to use. The first part 21 is used to hold the protective covering 10 by inserting the first connecting formation 24 through a hole 40 in the covering aligned with the second part 22. By application of pressure to the base portion 23 the arms 31 spring outwards to bypass the outermost head 28, 29.1 or 29.2 and then move inwards to embrace the head with the lugs 32 located behind the head. The base portion 23 overlies the outer surface of the protective covering 10 which thus becomes sandwiched between the two base portions 23 and 25.

The releasable connectors 20 may accommodate different thicknesses of protective covering by removing one or more of the additional heads 29.1 and 29.2, as required, so that the spacing between the base portions 23 and 25 matches the thickness of the covering.

The releasable connectors 20 are thus used to fix the protective coverings to the internal panels of the vehicle. In the case of the vertical coverings such as the protective covering 10 shown in **Fig. 2****,** the connectors 20 are suitably positioned to achieve firm attachment to the underlying panels. In the case of the protective floor covering the connectors may be particularly useful to secure the covering to the floor of the vehicle in areas which may lift, e.g. along the edge adjacent to the rear doors.

Upon delivery of the protective coverings and releasable connectors to the location where the protective covering is to be fitted to the vehicle the floor covering is assembled in the load-carrying space of the vehicle. The vertical coverings are attached to the side and door panels using the releasable connectors as described. The holes 40 can be preformed during manufacture according to the vehicle template. Alternatively, or in addition, the holes may be made by the installer in the required positions to ensure that secure fixing is achieved. Attachment of the protective coverings is therefore easily achieved without requiring skilled or specialist fitters.

A further benefit of the protective covering is that the driver or owner of the vehicle is able to easily remove any sections of the protective covering for cleaning or replacement. The connectors can be released by pulling the base portions of the first parts 21 with sufficient force that the arms 31 are caused to move outwards past the head of the second part 22. In the event of physical damage, or spillage of liquids such as corrosive fluids or paint, it is possible to re-supply the customer with a replacement section or sections for a fraction of the cost of replacing an entire covering. This is also particularly beneficial when an LCV is heavily loaded with large quantities of a product since only a portion of the load need be removed to allow a soiled or damaged section to be cleaned and replaced, which could achieve a considerable reduction in costly unloading and re-loading time.

Since no drilling of the vehicle panels is required there is no risk of rust damage to the body panels. When the vehicle is sold the protective coverings can be removed prior to sale, maintaining the value of the vehicle. The adhesive pad 36 securing the second connector parts can be released using a thin blade and/or an adhesive solvent.

Whilst a preferred form of releasable connector is described above it should be noted that the beads and gripping arms could be swapped between the two connector parts.

Although primarily intended for LCVs the protective covering could have other uses, such as protection of the boot or load space of standard vehicles or sports utility vehicles (SUVs). A protection pack for such use may include the boot/load space floor liner, e.g. with two interlocking pieces, two side panel protectors, and two or three protective coverings for the rear seat backs that face into the boot/load space area. Other uses include protection of load spaces in motor homes or caravans or vehicle awnings that include a specific tailored-fit floor area which cannot be adequately covered by a standard off-the-shelf floor mat or ground sheet. Many motor homes now have, effectively, a storage area or areas at the back of the van with outside access, where items such as bikes can be stored. Motor home owners generally want this area to stay clean and the flooring protected much like van and car owners. With the present covering the ability to easily replace any damaged piece rather than the whole matting or similar off-the-shelf covering is a distinct advantage.

Whilst the above description places emphasis on the areas which are believed to be new and addresses specific problems which have been identified, it is intended that the features disclosed herein may be used in any combination which is capable of providing a new and useful advance in the art.

## Claims

1. A method of protecting a panel (35) within the load-carrying space of a vehicle which method includes attaching a protective covering sheet (10) to the panel using a releasable connector (20);
- wherein the releasable connector includes a first part (21) and a second part (22) each having a base portion (23, 25) and a connecting formation (24, 26) by which the first and second parts can be releasably joined together;
- wherein the second part (22) is attached to the panel by applying an adhesive layer (36) between the base portion (25) thereof and the panel;
- wherein the base portion (23) of the first part (21) overlies a portion of the protective covering sheet (10) and the connecting formation (24) of the first part (21) is inserted through a hole (40) in the protective covering sheet (10);
- wherein one of said connecting formations (24, 26) comprises a stem (27) which carries a head (28);
- wherein the other connecting formation (26, 24) comprises a plurality of resilient arms (31).

2. The method of claim 1 wherein the resilient arms (31) project from the respective base portion (23) in a generally cylindrical formation.

3. The method of claim 1 or 2 wherein each of the resilient arms (31) has an inturned lug (32).

4. The method of any preceding claim wherein the stem (27) carries at least one additional head (29.1, 29.2).

5. The method of any preceding claim wherein the protective covering sheet (10) is formed from a thermoplastic elastomer.

6. The method of any preceding claim wherein the protective covering sheet (10) is formed from ethylene vinyl acetate (EVA) or thermoplastic polyamide (TPA).

7. The method of any of claims 1 to 4 wherein the protective covering sheet (10) is formed from non-flexible sheet materials, e.g. polymers such as polypropylene.

8. Apparatus for protecting a panel (35) within the load-carrying space of a vehicle, the apparatus including:
- a protective covering sheet (10);
- a releasable connector (20) to affix the protective covering to the panel, wherein the releasable connector comprises a first part (21) and a second part (22) each having a base portion (23, 25) and a connecting formation (24, 26) by which the first and second parts can be releasably joined together;
- an adhesive layer (36) to connect the second part (22) to the panel
- wherein the base portion (23) of the first part (21) overlies a portion of the protective covering sheet (10) and the connecting formation (24) of the first part (21) is inserted through a hole (40) in the protective covering sheet (10);
- wherein one of said connecting formations (24, 26) comprises a stem (27) which carries a head (28);
- wherein the other connecting formation (26, 24) comprises a plurality of resilient arms (31).

9. The apparatus of claim 8 wherein the resilient arms (31) project from the the base portion (23) in a generally cylindrical formation.

10. The apparatus of claim 8 or 9 wherein each of the resilient arms (31) has an inturned lug (32).

11. The apparatus of claim 8, 9 or 10 wherein the stem (27) carries at least one additional head (29.1, 29.2).

12. The apparatus of any of claims 8 to 11 wherein the protective covering sheet (10) is formed from a thermoplastic elastomer.

13. The apparatus any of claims 8 to 12 wherein the protective covering sheet (10) is formed from ethylene vinyl acetate (EVA) or thermoplastic polyamide (TPA).

14. The apparatus of any of claims 8 to 11 wherein the protective covering sheet (10) is formed from non-flexible sheet materials, e.g. polymers such as polypropylene.
